# EUROPÄISCHE PATENTSCHRIFT

(11) **EP 3 837 517 B1**
(45) Veröffentlichungstag und Bekanntmachung des Hinweises auf die Patenterteilung: **08.06.2022**
(21) Anmeldenummer: 19752090.1
(22) Anmeldetag: 25.07.2019
(51) Int. Cl.: G01L 1/12, G01L 3/10, G01L 5/00, G01L 5/22, F16D 23/14, F16D 28/00, F16H 25/16, F16H 25/24, H02K 7/06, H02K 7/10

(54) **AKTORSYSTEM, INSBESONDERE FÜR EIN FAHRZEUG**
ACTUATOR SYSTEM, IN PARTICULAR FOR A VEHICLE
SYSTÈME D'ACTIONNEUR, EN PARTICULIER POUR UN VÉHICULE

(30) Priorität: 16.08.2018 DE 102018119972
(43) Veröffentlichungstag der Anmeldung: 23.06.2021
(73) Patentinhaber: Schaeffler Technologies AG & Co. KG, 91074 Herzogenaurach (DE)
(72) Erfinder: HÖR, Simon, 77815 Bühl (DE); DIETRICH, Markus, 77704 Oberkirch (DE)
(86) Internationale Anmeldenummer: PCT/DE2019/100687
(87) Internationale Veröffentlichungsnummer: WO 2020/035104

(56) Entgegenhaltungen:
- WO-A1-2015/078724
- US-A1- 2007 193 372
- US-A1- 2012 241 281
- US-A1- 2017 313 379
- US-B1- 6 439 066

## Beschreibung

Die Erfindung betrifft ein Aktorsystem, insbesondere für ein Fahrzeug, umfassend einen Elektromotor, welcher mit einer Gewindespindel zur Umwandlung einer Drehbewegung des Elektromotors in eine Translationsbewegung der Gewindespindel in einer Wirkverbindung steht.

Aus der WO 2014/198268 A1 ist eine Anordnung zum Messen einer Kraft oder eines Momentes an einem Maschinenelement bekannt, wobei sich das Maschinenelement in einer Achse erstreckt und die Messung der Kraft bzw. des Momentes unter Nutzung des inversmagnetostriktiven Effektes erfolgt. Dabei weist das Maschinenelement eine Permanentmagnetisierung auf, die in der Achse ausgerichtet ist. Weiterhin umfasst die Anordnung mindestens einen Magnetfeldsensor, welcher zur Messung mindestens einer vektoriellen Komponente eines durch die Kraft und/oder durch das Drehmoment bewirkten Magnetfeldes ausgebildet ist.

In Aktorsystemen für Kraftfahrzeuge, wie sie beispielsweise für Kupplungs- und Getriebeaktorik oder im Hybridbereich bei Traktionsmotoren zur Anwendung kommen, werden häufig separate Drehmomentsensoren, wie beispielsweise Dehnungsmessstreifen, verbaut, welche entweder zu teuer oder technisch nicht integrierbar sind. In einer indirekten Methode wird das Drehmoment über einen Motorstrom des Aktors berechnet, was aufgrund der über der Temperatur veränderlichen Momentencharakteristiken sehr ungenau ist.

Ein entsprechendes Aktorsystem, hier ohne Drehmomentsensoren ist beispielsweise aus der US 2012/241281 A1 bekannt. Drehmomentsensorsysteme sind dagegen z.B. aus der WO 2015/078724 A1 und US 6 439 066 B1 bekannt.

Der Erfindung liegt die Aufgabe zugrunde, ein Aktorsystem anzugeben, bei welchem eine genaue Drehmomentmessung kostengünstig realisiert werden kann.

Erfindungsgemäß ist die Aufgabe durch die Merkmale des Anspruchs 1 dadurch gelöst, dass einem mit der Drehbewegung beaufschlagten, im Inneren mit geschlossenen Feldlinien magnetisierten Bauteil ein Magnetfeldsensor gegenüberliegt, dessen sensitive Fläche radial zu den geschlossenen Feldlinien des Bauteiles angeordnet ist, wobei der Magnetfeldsensor mit einer Auswerteeinheit zur Ermittlung des Drehmomentes aus der Magnetfeldänderung verbunden ist. Durch Nutzung des Prinzips der Magnetostriktion lässt sich eine zuverlässige Bestimmung des Drehmomentes eines Aktorsystems realisieren, wobei die zu verwendende Anordnung kostengünstig aufgebaut werden kann.

Bei dem Prinzip der Magnetostriktion, bei welchem im belasteten Zustand Spannungen im Material des Bauteiles eine Verlegung der geschlossenen Feldlinien aus dem Inneren des Materials des Bauteiles in den Außenbereich verursachen, kann das Bauteil beliebig steif ausgebildet sein.

Prinzipiell könnte das Bauteil integrierter Bestandteil eines Rotors des Elektromotors oder der Gewindespindel sein. Durch diese Integration wäre eine bauteilarme Variante des Aktorsystems ermöglicht, welche besonders kostengünstig wäre.

Erfindungsgemäß ist das Bauteil als Trägerelement ausgebildet, welches zwischen dem Rotor des Elektromotors und der Gewindespindel angeordnet ist. Somit erfolgt die Drehmomentmessung an dem extra dafür vorgesehenen Trägerelement, was die Justierung des Magnetfeldsensors im Aktorsystem vereinfacht.

In einer Ausgestaltung ist das Trägerelement als Zylinder ausgebildet, wobei eine Stirnfläche des Zylinders der sensitiven Fläche des Magnetfeldsensors gegenüberliegt. Ein solcher Zylinder ist im Querschnitt kreisförmig geschlossen magnetisiert. Durch ein anliegendes Drehmoment entstehen Torsionsspannungen in dem Trägerelement, die zu einem Austritt des Magnetfeldes aus dem Inneren des Trägerelementes nach außen führen. Dieses Magnetfeld wird als Maß für das Drehmoment genommen. Durch die Verwendung der Stirnseite des Trägerelementes wird es ermöglicht, dass zum einen eine Integration des Magnetfeldsensors überhaupt aufgrund bestehender Entfernungen zur Platine, Abstand zu den Rotormagneten und ähnliches möglich wird und zum anderen die Platine, das Trägerelement und der Magnetfeldsensor parallel zueinander angeordnet werden können.

In einer Variante ist das Bauteil durch mindestens ein Rotorblech des Elektromotors gebildet, wobei das magnetisierte Rotorblech des Elektromotors an die Gewindespindel angebunden ist. Dies hat den Vorteil, dass einmal auf zusätzliche magnetisierte Bauelemente verzichtet werden kann, zum anderen das komplette Drehmoment über das magnetisierte Rotorblech auf den Magnetfeldsensor übertragen wird.

In einer Ausführungsform wird bei einer Verwendung von mehreren magnetisierten Rotorblechen des Elektromotors als Bauteil durch die Auswerteeinheit eines der magnetisierten Rotorbleche als Kalibrierungselement für das Magnetfeld genutzt. Eine solche Kalibrierung des Magnetfeldsensors erfolgt im zusammengebauten Zustand des Aktorsystems, da nur ein nicht genau definierter Anteil des gesamten Drehmomentes über dieses eine Rotorblech übertragen wird.

Vorteilhafterweise umschließen die geschlossenen Feldlinien im Inneren des Trägerelementes die Gewindespindel. Ein Trägerelement mit solchen kreisförmigen Feldlinien ist einfach zu magnetisieren.

Alternativ sind die geschlossenen Feldlinien im Inneren des Trägerelementes in einem Endloskreis in dem Bauteil ausgebildet, wobei der Endloskreis der Feldlinien die Gewindespindel in ihrem Umfang umschließt. Die Magnetisierung des Bauteiles erfolgt dabei dahingehend, dass über dem rotierenden Bauelement ein gegebenenfalls rotierender Magnet kontinuierlich entfernt wird.

Zur Verbesserung der Genauigkeit, insbesondere zur Eliminierung von asymmetrischen Belastungen, sind mindestens zwei Magnetfeldsensoren zur Messung des durch das Drehmoment beeinflussten Magnetfeldes um den Umfang des Bauteiles angeordnet.

Die Erfindung lässt zahlreiche Ausführungsformen zu. Mehrere davon sollen anhand der in der Zeichnung dargestellten Figuren näher erläutert werden.

Es zeigen:
- Fig. 1:: ein erstes Ausführungsbeispiel des erfindungsgemäßen Aktorsystems,
- Fig. 2:: ein Ausführungsbeispiel für eine Magnetifizierungsvariante des Trägerelementes gemäß Fig. 1,
- Fig. 3:: ein weiteres Ausführungsbeispiel des erfindungsgemäßen Aktorsystems,
- Fig. 4:: ein weiteres Ausführungsbeispiel des erfindungsgemäßen Aktorsystems.

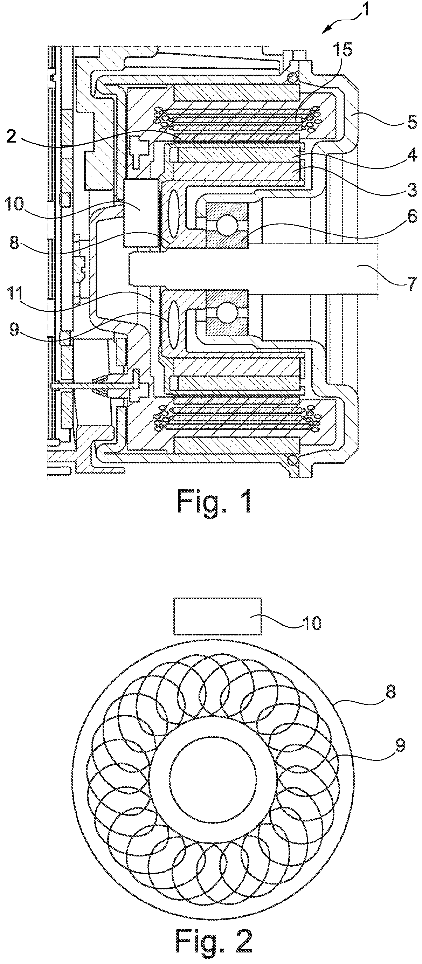

In Fig. 1 ist eine Prinzipdarstellung eines Aktorsystems 1 dargestellt, wie es als Kupplungsaktor oder Getriebeaktor in einem Kraftfahrzeug verwendet wird. Der Aktorsystem 1 umfasst einen Elektromotor 2, welcher aus einem Rotorblechpaket 3, radial dazu angeordneten Rotormagneten 4 und einem Gehäuse 5 besteht. Über ein Planetenwälzgetriebe 6 oder eine beliebige andere Übertragungseinheit, wie ein Kugelgewindetrieb, ist der Elektromotor mit einer Gewindespindel 7 verbunden, wobei durch das Planetenwälzgetriebe 6 die Rotationsbewegung des Elektromotors 2 auf die Gewindespindel zur Umsetzung in eine Translationsbewegung übertragen wird. Zwischen dem Rotorblechpaket 3 und der Gewindespindel 7 ist rotationssymmetrisch ein Trägerelement 8 angeordnet, welches den Rotor des Elektromotors 2 gegenüber der Gewindespindel 7 abstützt. Das Trägerelement 8 ist derartig magnetisiert, dass es in seinem Inneren in sich geschlossene Magnetfeldlinien 9 aufweist. Die Magnetfeldlinien 9 sind dabei so angeordnet, dass zu jeder Seite der Gewindespindel 7 je eine geschlossene Magnetfeldlinie ausgebildet ist. Ein Magnetfeldsensor 10 ist auf einer Platine 11 befestigt, wobei die sensitive Fläche des Magnetfeldsensors 10 radial zur geschlossenen Feldlinie 9 im Inneren des Trägerelementes 8 angeordnet ist.

In Fig. 2 ist eine Prinzipdarstellung für eine endlose Kreismagnetisierung des Trägerelementes 8, wie sie in Fig. 1 verwendet wird, dargestellt. Eine solche Kreismagnetisierung wird dadurch erreicht, dass das Trägerelement 8 rotiert und bei dieser Rotation ein ebenfalls rotierender Magnet kontinuierlich von dem Trägerelement 8 entfernt wird. Eine solche Magnetisierung hat den Vorteil, dass ein von der Winkellage des Trägerelementes 8 unabhängiges Sensorsignal erzielt wird, was insbesondere bei Rotoren von besonderer Bedeutung ist.

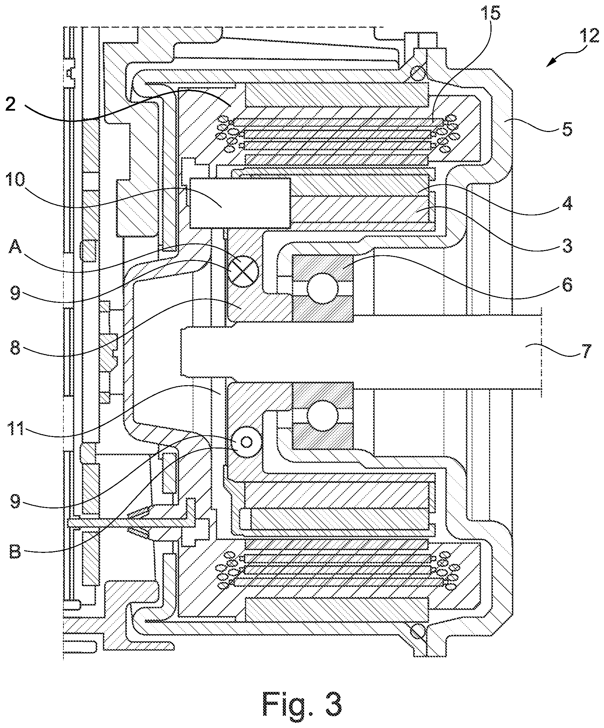

Fig. 3 zeigt eine weitere Ausführungsform des erfindungsgemäßen Aktorsystems 12 im Schnitt, bei welchem das Trägerelement 8 derart magnetisiert ist, dass die geschlossenen Magnetfeldlinien 9 die Gewindespindel7 in ihrem Zentrum umschließen. Dabei treten die Magnetfeldlinien 9 im Punkt A aus dem Trägerelement 8 aus und auf der entgegengesetzten Seite im Punkt B wieder in das Trägerelement 8 ein.

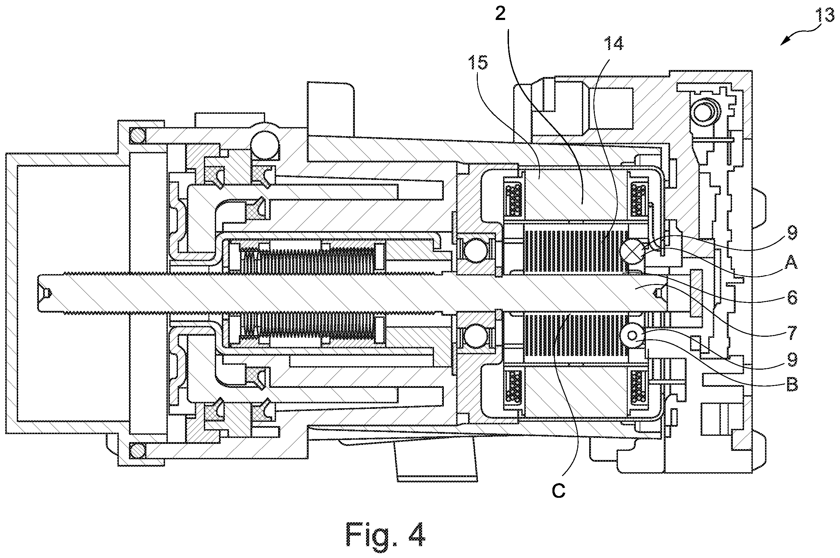

Fig. 4 zeigt ein weiteres Ausführungsbeispiel des erfindungsgemäßen Aktorsystems 13. Dabei wird auf das Trägerelement 8 verzichtet und die Rotorbleche 14 des Elektromotors 2 sind beabstandet zur Gewindespindel 7 gelagert. Die Rotorbleche 14 werden dabei rotationssymmetrisch von dem Stator 15 umgeben. Eines oder mehrere der Rotorbleche 14 sind gemäß der vorhergehenden Beschreibung magnetisiert, so dass jedes Rotorblech 14 geschlossene Magnetfeldlinien 9 umfasst. Der Bereich C für die Übertragung eines Drehmomentes ist dabei zwischen den Rotorblechen 14 und der Gewindespindel 7 ausgebildet.

Bei der Verwendung nur eines magnetisierten Rotorbleches 14 wird das komplette Drehmoment gebündelt über dieses eine Rotorelement 14 übertragen und von dem Magnetfeldsensor 10, welcher entsprechend gemäß Fig. 2 den Rotorblechen 14 gegenüberliegt, sensiert. Bei der Verwendung von mehreren magnetisierten Rotorblechen 14 und deren Anbindung an die Gewindespindel 7 kann jedes Rotorblech 14 nur einen Teil des Drehmomentes übertragen, so dass eine Kalibrierung des Magnetfeldsensors 10 notwendig wird. Bei einer solchen Kalibrierung wird ein magnetisiertes Rotorblech 14 als Messelement ausgewählt, wobei die Kalibrierung des Magnetfeldsensors 10 im zusammengebauten Zustand erfolgt, um festzustellen, welchen Teil des Drehmomentes durch ein einzelnes Rotorblech 14 übertragen wird.

Die beschriebenen Lösungen findet bei allen Aktoren im Kraftfahrzeug genauso wie bei Traktions-/Antriebsmotoren in Hybridmodulen und bei Elektroantrieben Anwendung.

### Bezugszeichenliste

- 1: Aktorsystem
- 2: Elektromotor
- 3: Rotorblechpaket
- 4: Rotormagnete
- 5: Gehäuse
- 6: Planetenwälzgetriebe
- 7: Gewindespindel
- 8: Trägerelement
- 9: Magnetfeldlinien
- 10: Magnetfeldsensor
- 11: Platine
- 12: Aktorsystem
- 13: Aktorsystem
- 14: Rotorblech
- 15: Stator

## Patentansprüche

1. Aktorsystem, insbesondere für ein Fahrzeug, umfassend einen Elektromotor (2), welcher mit einer Gewindespindel (7) zur Umwandlung einer Drehbewegung des Elektromotors (2) in eine Translationsbewegung der Gewindespindel (7) in einer Wirkverbindung steht, wobei ein mit der Drehbewegung beaufschlagtes, im Inneren mit geschlossenen Feldlinien (9) magnetisiertes Bauteil (8, 14) ein Magnetfeldsensor (10) gegenüber liegt, dessen sensitive Fläche radial zu den geschlossenen Magnetfeldlinien (9) des Bauteils (8) angeordnet ist, wobei der Magnetfeldsensor (10) mit einer Auswerteeinheit zur Ermittlung des Drehmomentes aus der Magnetfeldänderung verbunden ist, **dadurch gekennzeichnet, dass** das Bauteil als Trägerelement (8) ausgebildet ist, welches zwischen dem Rotor (3, 4) des Elektromotors (2) und der Gewindespindel (7) angeordnet ist.

2. Aktorsystem nach dem Oberbegriff von Anspruch 1, **dadurch gekennzeichnet, dass** das Bauteil integrierter Bestandteil eines Rotors (3, 4) des Elektromotors (2) ist.

3. Aktorsystem nach Anspruch 1, **dadurch gekennzeichnet, dass** das Trägerelement (8) als Zylinder ausgebildet ist, wobei eine Stirnfläche des Zylinders der sensitiven Fläche des Magnetfeldsensors (10) gegenüberliegt.

4. Aktorsystem nach dem Oberbegriff von Anspruch 1, **dadurch gekennzeichnet, dass** das Bauteil durch mindestens ein Rotorblech (14) des Elektromotors (2) gebildet ist, wobei das magnetisierte Rotorblech (14) des Elektromotors (2) magnetisch an die Gewindespindel (7) angebunden ist.

5. Aktorsystem nach Anspruch 4, **dadurch gekennzeichnet, dass** bei einer Verwendung von mehreren Rotorblechen (14) des Elektromotors (2) als Bauteil durch die Auswerteeinheit eines der magnetisierten Rotorbleche (14) als Kalibrierungselement für das Magnetfeld genutzt wird.

6. Aktorsystem nach mindestens einem der vorhergehenden Ansprüche 1 oder 3, **dadurch gekennzeichnet, dass** die geschlossenen Magnetfeldlinien (9) im Inneren des Trägerelementes (8) die Gewindespindel (7) umschließen.

7. Aktorsystem nach mindestens einem der vorhergehenden Ansprüche 1, 3 und 6 , **dadurch gekennzeichnet, dass** die geschlossenen Magnetfeldlinien (9) im Inneren des Trägerelementes (8) in einem Endloskreis ausgebildet sind, wobei der Endloskreis der Feldlinien (9) die Gewindespindel (7) umschließt.

8. Aktorsystem nach mindestens einem der vorhergehenden Ansprüche, **dadurch gekennzeichnet, dass** mindestens zwei Magnetfeldsensoren (10) zur Messung des durch die Spannung beeinflussten Magnetfeldes des Bauteiles (8, 14) verwendet werden.

## Claims

1. An actuator system, in particular for a vehicle, comprising an electric motor (2) which is in an operative connection with a threaded spindle (7) for converting a rotational movement of the electric motor (2) into a translational movement of the threaded spindle (7), wherein a component (8, 14) which is subjected to the rotational movement and is magnetised on the inside with closed field lines (9) is opposite a magnetic field sensor (10), the sensitive surface of which is arranged radially to the closed magnetic field lines (9) of the component (8), wherein the magnetic field sensor (10) is connected to an evaluation unit for determining the torque from the change in magnetic field, **characterised in that** the component is designed as a carrier element (8) which is arranged between the rotor (3, 4) of the electric motor (2) and the threaded spindle (7).

2. The actuator system according to the preamble of claim 1, **characterised in that** the component is an integrated part of a rotor (3, 4) of the electric motor (2).

3. The actuator system according to claim 1, **characterised in that** the carrier element (8) is designed as a cylinder, wherein an end face of the cylinder faces the sensitive surface of the magnetic field sensor (10).

4. The actuator system according to the preamble of claim 1, **characterised in that** the component is formed by at least one rotor lamination (14) of the electric motor (2), wherein the magnetised rotor lamination (14) of the electric motor (2) is magnetically connected to the threaded spindle (7).

5. The actuator system according to claim 4, **characterised in that**, when several rotor laminations (14) of the electric motor (2) are used as a component by the evaluation unit, one of the magnetised rotor laminations (14) is used as a calibration element for the magnetic field.

6. The actuator system according to at least one of the preceding claims 1 or 3, **characterised in that** the closed magnetic field lines (9) enclose the threaded spindle (7) in the interior of the support element (8).

7. The actuator system according to at least one of the preceding claims 1, 3 and 6, **characterised in that** the closed magnetic field lines (9) are formed in an endless circle inside the support element (8), wherein the endless circle of the field lines (9) encloses the threaded spindle (7).

8. The actuator system according to at least one of the preceding claims, **characterised in that** at least two magnetic field sensors (10) are used to measure the magnetic field of the component (8, 14) influenced by the voltage.

## Revendications

1. Système d'actionneur, en particulier pour un véhicule, comprenant un moteur électrique (2) qui est connecté de manière fonctionnelle avec une broche filetée (7) pour convertir un mouvement de rotation du moteur électrique (2) en un mouvement de translation de la broche filetée (7), un composant (8, 14) magnétisé en interne avec des lignes de champ (9) fermées et sollicité par le mouvement de rotation étant disposé en regard d'un capteur de champ magnétique (10), dont la surface sensible est agencée radialement par rapport aux lignes de champ magnétique (9) fermées du composant (8), le capteur de champ magnétique (10) étant raccordé à une unité d'évaluation pour déterminer le couple à partir de la variation de champ magnétique, **caractérisé en ce que** le composant est conçu comme élément de support (8) qui est agencé entre le rotor (3, 4) du moteur électrique (2) et la broche filetée (7).

2. Système d'actionneur selon le préambule de la revendication 1, **caractérisé en ce que** le composant fait partie d'un rotor (3, 4) du moteur électrique (2).

3. Système d'actionneur selon la revendication 1, **caractérisé en ce que** l'élément de support (8) est conçu comme un cylindre une surface avant du cylindre étant en regard de la surface sensible du capteur de champ magnétique (10).

4. Système d'actionneur selon le préambule de la revendication 1, **caractérisé en ce que** le composant est constitué d'au moins une tôle de rotor (14) du moteur électrique (2), la tôle de rotor (14) magnétisée du moteur électrique (2) étant attachée magnétiquement à la broche filetée (7).

5. Système d'actionneur selon la revendication 4, **caractérisé en ce que**, lors d'une utilisation de plusieurs tôles de rotor (14) du moteur électrique (2) en tant que composant, une des tôles de rotor (14) magnétisées est utilisée en tant qu'élément d'étalonnage par l'unité d'évaluation pour le champ magnétique.

6. Système d'actionneur selon au moins l'une quelconque des revendications précédentes 1 ou 3, **caractérisé en ce que** les lignes de champ magnétique (9) fermées au sein de l'élément de support (8) entourent la broche filetée (7).

7. Système d'actionneur selon au moins l'une quelconque des revendications précédentes 1, 3 et 6, **caractérisé en ce que** les lignes de champ magnétique (9) fermées au sein de l'élément de support (8) sont conçues dans un cercle sans fin, le cercle sans fin des lignes de champ (9) entourant la broche filetée (7).

8. Système d'actionneur selon au moins l'une quelconque des revendications précédentes, **caractérisé en ce qu'**au moins deux capteurs de champ magnétique (10) sont utilisés pour la mesure du champ magnétique du composant (8, 14) influencé par la tension.
